# EUROPEAN PATENT APPLICATION

(11) **EP 4 545 944 A1**
(43) Date of publication of application: **30.04.2025**
(21) Application number: 23205801.6
(22) Date of filing: 25.10.2023
(51) Int. Cl.: G01N 17/04, G01N 17/00, G01N 27/12

(54) **CORROSION MONITORING**

(71) Applicant: ABB SCHWEIZ AG, 5400 Baden (CH)
(72) Inventor: Leppäniemi, Jaakko, 04130 Sipoo (FI); Alastalo, Ari, 01840 Klaukkala (FI)
(74) Representative: Kolster Oy Ab

(57) **Abstract**

A corrosion sensor is disclosed, comprising corroding metal nanoparticles dispersed in an electrically insulating polymer matrix, wherein conductive percolation paths are formed by the corroding metal nanoparticles in the electrically insulating polymer matrix. An increase in the electrical resistance of the corrosion sensor, under exposure to corrosive gas that corrodes the corroding metal nanoparticles, provides an indication of corrosion.

## Description

### FIELD OF THE INVENTION

The present invention relates to corrosion monitoring, and more particularly to a corrosion sensor.

### BACKGROUND ART

The following description of background art may include insights, discoveries, understandings or disclosures, or associations together with disclosures not known to the relevant art prior to the present invention but provided by the invention. Some such contributions of the invention may be specifically pointed out below, whereas other such contributions of the invention will be apparent from their context.

Corrosion refers to deterioration of metal due to chemical reactions between the metal and the environment. Corrosion of electronic components occurs under ambient conditions containing corrosive gases, which may cause electronic component failure or electronic system failure, operation downtime, and expensive repairs.

The presence of corrosive gases at ppb-level concentrations may be detected using indirect measurements performed on corroding metal sheets, such as corrosion coupons (e.g. by Corrosion Classification Coupon by Purafil), wherein off-line analysis tools are used for detecting the layer thickness of corroded crust formed on top of a corroding metal sheet, such as Ag, Cu or Fe. The thickness of the corroded layer may then be correlated with a certain amount of corrosive gases.

In a visual inspection of Ag corrosion sensor, the silvery color of the Ag thin-film changes with respect to corrosive, sulfur-containing gases. The Ag corrosion sensor may be used to qualitatively distinguish between H₂S and reduced sulfur gas (S₈) by the length of a blackened region of the corrosion sensor, due to the different diffusivity of the gases in air, as H₂S leads to a longer black region due to its higher diffusivity. The concentration of the gas is qualitatively detected by the length of a yellow region of silver sulfide (Ag₂S).

However, such slow and cumbersome off-line measurements are not sufficient when it is necessary to respond to rapid changes in the ambient gas. In addition, the off-line measurements are not usable for detecting a chemical composition or relative concentration of the corrosive gases.

For on-line continuous monitoring of corrosive gases, the Ag corrosion sensor may be used in an electrical corrosion sensor, where a thin film of Ag is deposited on top of non-corroding base metal. The corroded Ag metal changes the resistor network resistance of the base metal and Ag thin film connected in parallel.

### SUMMARY

The following presents a simplified summary of features disclosed herein to provide a basic understanding of some exemplary aspects of the invention. This summary is not an extensive overview of the invention. It is not intended to identify key/critical elements of the invention or to delineate the scope of the invention. Its sole purpose is to present some concepts disclosed herein in a simplified form as a prelude to a more detailed description.

According to an aspect, there is provided the subject matter of the independent claims. Embodiments are defined in the dependent claims.

One or more examples of implementations are set forth in more detail in the description below. Other features will be apparent from the description, and from the claims.

### BRIEF DESCRIPTION OF THE DRAWINGS

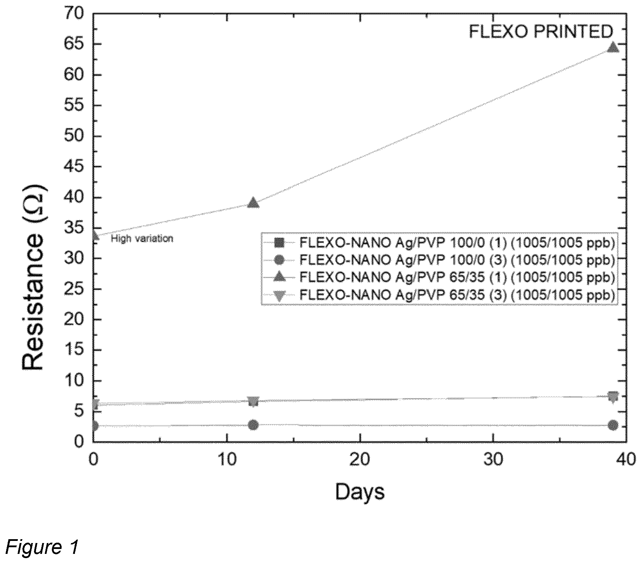

In the following the invention will be described in greater detail by means of preferred embodiments with reference to the attached drawings, in which
Figure 1 shows tests results regarding sensitivity obtained for printing ink-based corrosion sensors.

### DETAILED DESCRIPTION OF EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising", "containing" and "including" should be understood as not limiting the described embodiments to consist of only those features that have been mentioned and such embodiments may contain also features/structures that have not been specifically mentioned.

Although being a noble metal, silver may corrode in ambient atmosphere e.g. by reacting with sulfur-containing gases such as hydrogen sulfide (H₂S) and/or carbonyl sulfide. Copper is considered a noble metal; it resists attack by oxygen, although some air pollutants, such as H₂S, change its surface properties, even at ambient temperature. Copper sulphidation is a fast process occurring on the metal-gas phase interface impairing the corrosion resistance of copper, and leading to electric failures of electronic devices.

Printing inks for conductive structures may be based on metal nanoparticles, wherein the metal nanoparticles are typically stabilized with organic molecules or thiols to avoid particle agglomeration that leads into poor printability and insufficient ink stability. When the metal nanoparticles are printed onto a substrate, the nanoparticles form a porous structure with a large surface area to volume ratio. The stabilizing encapsulant is typically removed using heat treatment during which the stabilizer detaches and allows the particles to move and form connected interfaces via necking of the bare metal surfaces. Larger particles grow with the expense of smaller particles in a ripening process which leads to a thermodynamically more stable structure with a minimized surface area to volume ratio. However, even separated metal nanoparticles form conductive networks via percolation, where the conductivity of the nanoparticle structure is strongly dependent on interparticle gaps.

In an embodiment, the interparticle gaps may be adjusted by introducing an excess of non-conductive polymer filler as matrix material, and thereby the conductivity of the metal nanoparticle network may be modified. Especially when the interparticle-distance is increased by the addition of the polymer to be close to a percolation threshold (a point where a large connected structure emerges), the modulation of the conductivity is expected to be large with small changes to the interparticle distance.

The large surface area to volume ratio of nanoparticle-based conductors makes them generally sensitive to ambient gases. By avoiding post-printing by high-temperature sintering where significant grain growth of the metal nanoparticles occurs, the metal nanoparticles are able to retain their large surface area while being conductive and therefore suitable for gas sensor applications.

An aspect of the invention is a corrosion sensor comprising corroding metal nanoparticles dispersed in an electrically insulating polymer matrix, wherein conductive percolation paths are formed by the corroding metal nanoparticles in the electrically insulating polymer matrix, wherein an increase in the electrical resistance of the corrosion sensor, under exposure to corrosive gas that corrodes the corroding metal nanoparticles, provides an indication of corrosion. The metal nanoparticles may be 1 to 500 nm, preferably 1 to 100 nm, in diameter.

In an embodiment, the corrosion sensor may be in the form of composite printing ink.

In an embodiment, the corroding metal nanoparticles may be Ag, Cu and/or Fe nanoparticles and/or any other metal nanoparticles that readily corrode. The corroding metal is electrically conductive.

In an embodiment, the electrically insulating polymer matrix may comprise polyvinyl pyrrolidone. In addition or alternatively, the electrically insulating polymer matrix may be any electrically insulating polymer that is compatible with the metal nanoparticles. For example, dielectric polymer(s) such as polyvinyl alcohol and/or poly(methyl methacrylate) may be used.

In an embodiment, the sensitivity of the corrosion sensor to the corrosive gas may be dependent on the weight ratio of the corroding metal nanoparticles to the electrically insulating polymer matrix in the corrosion sensor. The sensitivity of the corrosion sensor to the corrosive gas may increase with an increased weight ratio of the corroding metal nanoparticles to the electrically insulating polymer matrix in the corrosion sensor. The sensitivity of the corrosion sensor to the corrosive gas may decrease with a decreased weight ratio of the corroding metal nanoparticles to the electrically insulating polymer matrix in the corrosion sensor.

In an embodiment, the sensitivity of the corrosion sensor to the corrosive gas may be dependent on the porosity of the corrosion sensor. The sensitivity of the corrosion sensor to the corrosive gas may increase with an increased porosity of the corrosion sensor. The sensitivity of the corrosion sensor to the corrosive gas may decrease with a decreased porosity of the corrosion sensor.

In an embodiment, the metal nanoparticles may be in-homogenously mixed in the electrically insulating polymer matrix. Encapsulated metal nanoparticles may form percolative networks inside a porous structure formed by the electrically insulating polymer matrix.

In an embodiment, the corrosive gas may be at least one of SO₂ and H₂S.

In an embodiment, the weight ratio of the corroding metal nanoparticles to the electrically insulating polymer matrix in the corrosion sensor may be from 80/20 to 20/80, preferably from 70/30 to 60/40, more preferably 65/35. This means the initial weight ratio. During use of the corrosion sensor, the weight ratio may change as the corroding metal nanoparticles corrode under exposure to corrosive gas(es), leading to a decreased proportion of the corroding metal nanoparticles in the corrosion sensor.

In an embodiment, the corrosion sensor may be used for monitoring presence of a corrosive gas. The corrosion sensor may be in the form of composite printing ink printed on a substrate.

In an embodiment, the corrosion sensor may be in the form of the composite printing ink printed on the substrate using a composite printing ink layer thickness of 0.1 to 10 µm, such as 0.5 to 1.2 µm. The layer thickness may depend on the printing method; in flexographic printing the layer thickness may be 0.5 to 1.2 µm.

In an embodiment, the substrate may be an electronic component. The electronic component may be at least one of transistor, resistor, capacitor, diode, and/or integrated circuit.

In an embodiment, a method is provided for monitoring presence of a corrosive gas, the method comprising attaching the corrosion sensor to a substrate, subjecting the corrosion sensor to an atmosphere to be monitored, and measuring an increase of electrical resistance in the corrosion sensor. An increase in the electrical resistance of the corrosion sensor, under exposure to corrosive gas that corrodes the corroding metal nanoparticles, provides an indication of the presence of corrosive gas(es) corroding the metal nanoparticles.

An embodiment provides a tunable corrosion sensor where corroding metal nanoparticles are dispersed in an insulating polymer matrix. Conductive percolation paths are formed through the metal nanoparticles. The corrosion sensor may be formed on a substrate using printing methods. The resistance of the sensor increases with exposure to gases that corrode the metal nanoparticles. Effects of corrosion may include changes both in a contact between the nanoparticles and in the fraction of conductive metal in the corrosion sensor structure. The conductive fraction affects the corrosion sensor resistance strongly when the fraction is close to percolation threshold. The corrosion sensor may be used in-situ for monitoring corrosion behavior. By selecting the mixing ratio of the metal nanoparticles to the insulating polymer, the initial conductance of the metal nanoparticle network may be tailored. Also, when using a polymer and metal nanoparticles that are not homogenously mixing, the porosity of the corrosion sensor may be tuned and surface area of the corrosion sensor may be increased which also affects the sensitivity of the corrosion sensor.

In an embodiment, the metal nanoparticles may be Ag, Cu or Fe nanoparticles, preferably Ag nanoparticles. When the metal nanoparticles, such as Ag nanoparticles, become corroded due to exposure to corrosive gases, their surface becomes non-conductive. The effective distance between the conductive nanoparticle cores increases, and if the initial interparticle distance is close to the percolation threshold, corrosion produces significant changes in the conductivity. This may be utilized in the corrosion sensor. Moreover, when the Ag nanoparticles become corroded, the fraction of the conductive metal in the corrosion sensor structure decreases. The sensitivity of the metal nanoparticle-based corrosion sensor for corrosive gases may be tuned by selecting a desired metal nanoparticle to non-conductive polymer filler ratio.

In an embodiment, to provide the corrosion sensor, commercially available Ag nanoparticle ink may be mixed with polyvinylpyrrolidone (PVP) polymer ink to form a printable composite ink. The composite ink may be printed using flexographic printing on a PET substrate. The composite ink exhibits stronger corrosion in an atmosphere containing 1005 ppb H₂S and 1005 ppb SOz, compared to a reference sample printed with the same Ag nanoparticle ink but without the PVP matrix (see Example 1 below).

In an embodiment, the metal nanoparticle ink and the non-conductive polymer may be in-homogenously mixed, wherein a structure is formed where encapsulated metal nanoparticles are forming afore-mentioned percolative networks inside a porous structure formed by the non-conductive polymer filler. By changing the mixing ratio of the metal nanoparticle to the polymer, both the surface area that is exposed to the corrosive gas and the size of the percolative network may be varied.

An embodiment enables low-cost, continuous monitoring of corrosive gases. The present invention enables the use of the corrosive gas sensor as a replaceable corrosion sensor that may be changed when the corrosion sensor becomes fully corroded, or changes are made in the corrosive gas atmosphere to be monitored. Additionally, it is possible to adjust the sensitivity of the corrosion sensor by adjusting the porosity of the sensor material and the proportion of the conductive metal in the sensor material.

An embodiment enables in-situ corrosion measurements that provide real time information of corrosion behavior at operation conditions.

An embodiment enables monitoring of corrosive gases also in gas environments where the corrosion rate may significantly change over time.

In an embodiment, the increase of the electrical resistance in the corrosion sensor may be measured using an ER (electrical resistance) probe. The ER probe may be used to measure the change in Ohmic resistance of the corrosion sensor exposed to the corrosive gas(es). The action of corrosion on the corrosion sensor produces a decrease in its cross-sectional area with a corresponding increase in its electrical resistance. The increase in electrical resistance may be related directly to metal loss, and the metal loss as a function of time is the corrosion rate. By ER probes, direct corrosion rates may be obtained. They respond quickly to corrosion upsets and may be used to trigger an alarm. The (increase of) electrical resistance may be measured/detected using Ohm's law and supplying constant current (voltage) and measuring voltage drop over (current through) the corrosion sensor.

### Example 1

An ink containing Ag nanoparticles (NPs) and non-conductive polymer was synthesized for flexographic printing. First, polyvinyl pyrrolidone (PVP, from Agros Organics, M_{w} 1300k) was dissolved in isopropanol at 30 g/l concentration. Then, 3.3 g of Ag NP ink from InkTec (TEC-PR-040) and 2 g of isopropanol were added to 1.77 g of the previous PVP in isopropanol. The printing ink containing 65 wt-% Ag NP ink and 35 wt-% PVP ink was thoroughly mixed for a few hours. The printing ink was printed as 1 or 3 successive layers using flexographic printing system (RK Flexiproof 100) and 10 ml/m² anilox and dried for 2 min at 130 °C to remove the solvent. No high-temperature or long-duration sintering step was performed to avoid forming of a structure with large grain sizes. The bare Ag NP ink was printed also as 1 or 3 layers as a reference. The thickness (resistance) was 0.54 µm (6.03 Ohm) and 1.12 µm (2.64 Ohm) for the bare Ag NP ink printed as 1 or 3 layers, respectively, and 0.57 µm (33.65 Ohm) and 1.00 µm (38.98 Ohm) for the ink containing the Ag NP/PVP mixture as 1 or 3 layers, respectively. The resistance of the Ag NP/PVP mixture with a single layer had considerable variation in the resistance (deviation about 40 %). SEM images suggested that the printed ink layers were porous and the Ag nanoparticles showed some degree of necking but were not forming large grains.

The printed Ag NP and Ag NP/PVP traces were exposed to corrosive gases H₂S (at 1005 ppb) and SOz (at 1005 ppb) at 80% relative humidity. The resistance of the Ag NP ink as 3 layers did not show increase in resistance, whereas the resistance of the samples with 1 layer of Ag NP and 3 layers of Ag NP/PVP showed approximately 25% increase during the 40 days test period. Moreover, the sample with a single layer printed with the Ag NP/PVP showed already over 90% increase in the resistance, thus indicating high sensitivity to the corroding gases. The test results are shown in Figure 1. The results suggest that the sensitivity of the corrosion sensor can be tuned by controlling the amount of corroding metal nanoparticles in the insulating polymer matrix.

It will be obvious to a person skilled in the art that, as the technology advances, the inventive concept can be implemented in various ways. The invention and its embodiments are not limited to the examples described above but may vary within the scope of the claims.

## Claims

1. A corrosion sensor comprising
corroding metal nanoparticles dispersed in an electrically insulating polymer matrix, wherein electrically conductive percolation paths are formed by the corroding metal nanoparticles in the electrically insulating polymer matrix,
wherein an increase in the electrical resistance of the corrosion sensor, under exposure to corrosive gas that corrodes the corroding metal nanoparticles, provides an indication of corrosion.

2. The corrosion sensor according to claim 1, wherein it is in the form of composite printing ink.

3. The corrosion sensor according to claim 1 or 2, wherein the corroding metal nanoparticles are Ag, Cu and/or Fe nanoparticles and/or other metal nanoparticles.

4. The corrosion sensor according to claim 1, 2 or 3, wherein the electrically insulating polymer matrix comprises polyvinyl pyrrolidone, polyvinyl alcohol, and/or poly(methyl methacrylate).

5. The corrosion sensor according to any of the preceding claims, wherein the sensitivity of the corrosion sensor to the corrosive gas is dependent on the weight ratio of the corroding metal nanoparticles to the electrically insulating polymer matrix in the corrosion sensor,
wherein the sensitivity of the corrosion sensor to the corrosive gas is increased with an increased weight ratio of the corroding metal nanoparticles to the electrically insulating polymer matrix in the corrosion sensor,
wherein the sensitivity of the corrosion sensor to the corrosive gas is decreased with a decreased weight ratio of the corroding metal nanoparticles to the electrically insulating polymer matrix in the corrosion sensor.

6. The corrosion sensor according to any of the preceding claims, wherein the sensitivity of the corrosion sensor to the corrosive gas is dependent on the porosity of the corrosion sensor,
wherein the sensitivity of the corrosion sensor to the corrosive gas is increased with an increased porosity of the corrosion sensor,
wherein the sensitivity of the corrosion sensor to the corrosive gas is decreased with a decreased porosity of the corrosion sensor.

7. The corrosion sensor according to any of the preceding claims, wherein the metal nanoparticles are in-homogenously mixed in the electrically insulating polymer matrix, wherein encapsulated metal nanoparticles form percolative networks inside a porous structure formed by the electrically insulating polymer matrix.

8. The corrosion sensor according to any of the preceding claims, wherein the corrosive gas is at least one of SOz and H₂S.

9. The corrosion sensor according to any of the preceding claims, wherein the weight ratio of the corroding metal nanoparticles to the electrically insulating polymer matrix in the corrosion sensor is from 80/20 to 20/80, preferably from 70/30 to 60/40, more preferably 65/35.

10. A use of the corrosion sensor according to any of claims 1 to 9 for monitoring presence of a corrosive gas, wherein the corrosion sensor in the form of composite printing ink is printed on a substrate.

11. The use according to claim 10, wherein the corrosion sensor in the form of the composite printing ink is printed on the substrate in a composite printing ink layer thickness of 0.1 to 10 µm, such as 0.5 to 1.2 µm.

12. The use according to claim 10 or 11, wherein the substrate is an electronic component.

13. A method for monitoring presence of a corrosive gas, the method comprising attaching a corrosion sensor according to any of claims 1 to 9 to a substrate, subjecting the corrosion sensor to an atmosphere to be monitored, and measuring an increase of electrical resistance in the corrosion sensor.
